# EUROPEAN PATENT SPECIFICATION

(11) **EP 3 272 810 B1**
(45) Date of publication and mention of the grant of the patent: **05.02.2020**
(21) Application number: 16764939.1
(22) Date of filing: 14.03.2016
(51) Int. Cl.: C08L 77/02, C08K 3/08, C08K 3/34, C08K 7/00, C08K 9/02, C08K 3/22

(54) **POLYAMIDE RESIN COMPOSITION AND MOLDED BODY OBTAINED BY MOLDING SAME**
POLYAMIDHARZZUSAMMENSETZUNG UND DARAUS GEFORMTER FORMKÖRPER
COMPOSITION DE RÉSINE POLYAMIDE ET CORPS MOULÉ OBTENU PAR SON MOULAGE

(30) Priority: 16.03.2015 JP 2015052166
(43) Date of publication of application: 24.01.2018
(73) Proprietor: Unitika Ltd., Amagasaki-shi, Hyogo 660-0824 (JP)
(72) Inventor: KISARA, Yoshihito, Uji-shi Kyoto 611-0021 (JP); MUKAE, Hirofumi, Uji-shi Kyoto 611-0021 (JP); NEGI, Yukinari, Uji-shi Kyoto 611-0021 (JP)
(74) Representative: Hoffmann Eitle
(86) International application number: PCT/JP2016/058001
(87) International publication number: WO 2016/148109

(56) References cited:
- EP-A1- 1 022 313
- JP-A- S54 114 534
- JP-A- 2004 237 551
- JP-A- 2013 241 506
- JP-A- 2014 080 574
- JP-A- 2014 198 796
- HIROFUMI MUKAE: 'Nanocomposite Nylon Achieving Paintless Finish' PLASTICS AGE vol. 60, 2014, pages 61 - 64, XP009505924
- YUKINARI NEGI: 'Nanocomposite Nylon no Gijutsu to Tokucho' JETI vol. 62, no. 8, 2014, pages 31 - 34, XP009505930
- YUKINARI NEGI: 'Jidosha Buhin-yo 'Nanokon' no Gijutsu to Tokucho' JETI vol. 63, no. 2, February 2015, pages 93 - 96, XP009505929

## Description

### TECHNICAL FIELD

The present invention relates to a polyamide resin composition capable of giving a molded article which has few flow marks and which has a metallic appearance with high luminance and high glossiness.

### BACKGROUND ART

A molded particle molded with a thermoplastic resin such as a polyamide resin etc. is generally applied to an automobile interior part, an engine cover, and an interior or exterior cover for home electric appliance.

A metallic color tone such as steel or aluminum alloy is required for the appearance of such a resin molded article in some cases. In particular, a demand for aesthetic appearance of a resin-molded article is increased in recent years. The appearance of resin-molded article is required not only to have a metallic tone but also to have a glossy feeling and a suppressed brilliant feeling.

Various metallic color tones, such ones from silver gray to grayish white with slight whiteness, are required.

To meet such requirements, a method for coating in which a paint containing metal powder such as aluminum powder etc. is applied onto the surface of a resin-molded article, that is, a so-called metallic coating is carried out conventionally. However, as the metallic coating contains an organic solvent, a problem of working environments arises. There has been also such a problem as inferior productivity, resulting in high costs.

In order to solve the above problems, it is proposed to use a resin composition obtained by adding metal powder such as aluminum etc., mica, wollastonite, and glossy particles with surface of glass etc. coated with metal into a thermoplastic resin such as a polyamide resin etc.

For example, Patent Document 1 discloses a polyamide resin composition in which metallic color-developing particles are compounded into a polyamide resin with lamellar silicate dispersed uniformly on molecular order level. Patent Document 2 discloses a polyamide resin composition containing a polyamide and a metal flake. Patent Document EP 1 022 313 is directed to a polyamide resin composition with a metallic appearance, the compositions of Examples 9 and 10 comprising 100 parts by weight Nylon 6, 2 parts by weight swellable fuoromica or montmorillonite, as well as 1 part by weight aluminum powder (50 µm) and 0.2 part by weight pearly pigments (20 µm).

### PRIOR ART DOCUMENT

### PATENT DOCUMENTS

Patent Document 1: WO 1999/13006
Patent Document 2: JP2001-509524A

### SUMMARY OF THE INVENTION

### TECHNICAL PROBLEMS

However, a molded article obtained from the polyamide composition described in the Patent Document 1, 2 can achieve metallic appearance, but had such problems as generation of flow marks caused from orientation of metallic color-developing particles such as aluminum powder etc., and low luminance.

The present invention has been made to solve the above problems, and an object of the present invention is to provide a polyamide resin composition capable of giving a molded article which has few flow marks and which has a metallic appearance with high luminance.

### SOLUTION TO PROBLEMS

The present inventors have intensively studied repeatedly in order to solve the above problems, and as a result, have found that the object is achieved by using polyamide resin composition as defined in the claims.

### EFFECTS OF INVENTION

According to the present invention, it is possible to provide a polyamide resin composition capable of giving a molded article which has few flow marks and which has a metallic appearance with high luminance and glossiness.

A polyamide resin composition of the present invention has also stiffness properties possessed by a conventional polyamide resin composition with metallic appearance, and excellent surface glossiness.

A polyamide resin composition of the present invention can be used suitably as a resin part with a complicated shape in application to automobile interior parts etc.

### BRIEF DESCRIPTION OF THE DRAWINGS

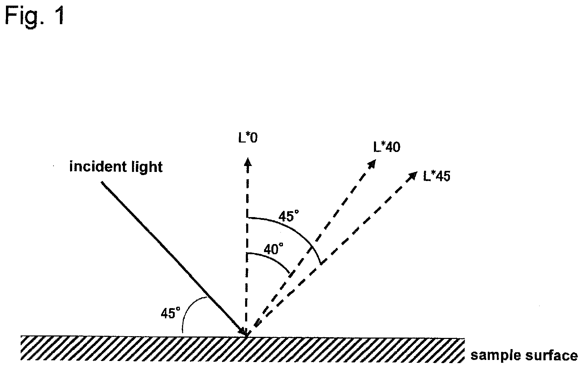

[Fig. 1] A schematic drawing for explaining a method for measuring L*of the surface of a molded article comprised of a polyamide resin composition of the present invention.

### DESCRIPTION OF EMBODIMENTS

A polyamide resin composition of the present invention comprises at least a polyamide resin (A), a swellable lamellar silicate (B) and a metallic material (C) as defined in the claims.

The polyamide resin (A) used in the present invention is polyamide 6, or a mixture of polyamide 6 with polyamide 11 and/or polyamide 12 in a viewpoint of improvement of light resistance, heat discoloration resistance, resistance to moist heat.

When a mixture of polyamide 6 and polyamide 11 and/or polyamide 12 is used as the polyamide resin (A), a content of polyamide 6 in the polyamide resin (A) is 40% by mass ∼ less than 100% by mass, preferably 50% by mass ∼less than 100% by mass, more preferably 60% by mass ∼ less than 100% by mass, even more preferably 70% by mass ∼ less than 100% by mass. By using the above polyamide mixture, deposition of oligomers etc. mainly caused by polyamide 6 under heat and moisture conditions can be suppressed. When the content of polyamide 6 is small, heat resistance may be insufficient.

The mixture of polyamide 6 and polyamide 11 and/or polyamide 12 may be a mixture wherein polyamide 6 homopolymer is mixed with polyamide 11 and/or polyamide 12, or a copolymer thereof. A mixture, in particular, a melted mixture is preferable from the viewpoint of availability.

When the polyamide resin (A) is a copolymer comprising polyamide 6 and polyamide 11 and/or polyamide 12, a copolymer which is constituted by 6-aminocaproic acid unit and 11-aminoundecanoic acid unit and/or 12-aminododecanoic acid unit is preferable. That is, it is preferable that the polyamide resin (A) is a polyamide 6/polyamide 11 copolymer (nylon 6/11), or a polyamide 6/polyamide 12 copolymer (nylon 6/12), or a polyamide 6/polyamide 11/polyamide 12 copolymer (nylon 6/11/12).

While a relative viscosity which is an index of a molecular weight of the polyamide resin (A) is not particularly limited, the relative viscosity measured under conditions of a concentration of 1 g/dl at a temperature of 25 °C in a solvent of 96% by mass concentrated sulfuric acid is 1.5 ∼ 3.5, preferably 1.7 ∼ 3.2, more preferably 1.9 ∼ 3.0. When the relative viscosity is less than 1.5, a molded article obtained of the polyamide resin composition may be inferior in light resistance, heat discoloration resistance, resistance to moist heat. On the other hand, when the relative viscosity exceeds 3.5, fluidity is inferior, resulting in that kneading may become difficult, and moldability deteriorates, resulting in that luminance may be inferior.

The polyamide resin composition of the present invention contains a swellable lamellar silicate (B). By including the swellable lamellar silicate (B), luminance and flip-flop properties can be enhanced. The flip-flop properties are an index peculiar to metallic color, and refers to a magnitude of color tone according to an observation angle. The larger this change, the more metallic appearance. It is preferable that flip-flop properties are high.

The swellable lamellar silicate (B) for use in the present invention is montmorillonite, hectorite, or fluoromica. In the present invention, swellable fluoromica and hectorite are particularly preferable for use. These may be used singly or two or more may be used in combination.

The swellable fluoromica favorably used in the present invention is the one having the structural formula shown by the following formula.

Ma(MgXLib)Si₄OYFZ

(wherein, M represents an ion-exchanging cation, specifically sodium or lithium; a, b, X, Y and Z respectively represent a coefficient, and 0 ≤ a ≤ 0.5, 0 ≤ b ≤ 0.5, 2.5 ≤ X ≤ 3, 10 ≤ Y ≤ 11, and 1.0 ≤ Z ≤ 2.0).

As a method for producing swellable fluorine mica, for example, a melting method, in which silicon oxide, magnesium oxide and various fluorides are mixed, the resultant mixture is melted completely in an electric furnace or a gas oven at a temperature of 1,400 to 1,500°C and crystals of the swellable fluoromica are grown in the reaction container in the cooling process, can be mentioned. There is also a method for obtaining a swellable fluoromica (JPH2-149415A) in which talc [Mg₃Si₄O₁₀(OH)₂ is used as a starting material and an alkali metal ion is intercalated to give swellable fluoromica with swelling property. In this method, talc and an alkali silicofluoride mixed at a predetermined compounding ratio is heat-treated in a ceramic crucible at a temperature of 700 to 1,200°C for a short period of time to give swellable fluoromica.
It is preferable that an amount of alkali silicofluoride to be mixed with talc is in the range between 10∼35% by mass relative to the whole mixture. When the amount is not within the range, a production yield of the swellable fluorine mica tends to decrease.

The montmorillonite for suitable use in the present invention is the compound represented by the following formula, which is produced from a natural product after purification, for example, by elutriation.

MaSi(Al₂-aMg)O₁₀(OH)₂ · nH₂O

(wherein, M represents a cation such as sodium; 0.25 ≤ a ≤ 0.6; and the number of water molecules bound to the interlayer ion-exchangeable cations, which is expressed by nH₂O, may vary significantly according to the cationic species used and the conditions such as humidity).

The montmorillonites include the one substituted with similar ions, such as magnesian montmorillonite, iron montmorillonite, and iron magnesian montmorillonite, and such a montmorillonite may be used instead.

Hectorite favorably used in the present invention is the one having the structural formula shown by the following formula, and may be a natural product or an artificially produced product.

Na_{0.66}(Mg_{5.34}Li_{0.66})Si₈O₂₀(OH)₄·nH₂O

Hectorite has a structure comprising a negatively charged silicate layer containing silicate as a main component and an ion-exchangeable cation standing between the layers. When compared with the other swellable lamellar silicate, water molecules easily enter between layers since it contains a lot of hydroxyl groups (that is, high hydrophilic property) and it is liable to swell. In addition, when compared with the other swellable lamellar silicate, a particle size is small.

The polyamide resin composition of the present invention contains a metallic material (C) in order to improve luminance of a molded article obtained. It is necessary that a specific amount of the swellable lamellar silicate (B) is contained at the same time together with the metallic material (C). By containing the swellable lamellar silicate (B), dispersibility of the metallic material (C) can be improved. The improvement of dispersibility of the metallic material (C) improves a clear feeling. Even if a content of the metallic material (C) is low, it is possible to enhance the clear feeling of a molded article effectively.

A content of the swellable lamellar silicate (B) is 1∼0 parts by mass, preferably 2∼9 parts by mass, more preferably 3∼8 parts by mass, relative to 100 parts by mass of the polyamide resin (A). By containing a prescribed amount of the swellable lamellar silicate (B), luminance, flip-flop properties and stiffness properties are improved. When a content of the swellable lamellar silicate (B) is less than 1 part by mass, luminance, flip-flop properties and stiffness properties recede, being not preferable. When the content exceeds 10 parts by mass, smoothness of a molded article obtained is lowered and surface glossiness deteriorates, being not preferable.

By containing a prescribed amount of the swellable lamellar silicate (B), a molded article obtained is observed in the states showing a metallic feeling in each part of steric parts when looking straight at the molded article from some angle. That is, a molded article provided with more metal-like stereoscopic effect can be formed. When the content of the swellable lamellar silicate (B) is less than 1 part by mass, a metal-like stereoscopic effect cannot be obtained.

Since the polyamide resin composition of the present invention aims to improve luminance and glossiness of a molded article obtained and to reduce flow marks, it is necessary to use a metallic material having an appropriate size in combination in the polyamide resin composition. In general, when the one having a small particle size is used, it becomes hard for flow marks to be generated, but it becomes hard for luminance to improve.
When the one having a large particle size is used, luminance improves, but there is a tendency for flow marks to be liable to be generated. In the present invention, by using a metallic material such as aluminum powder having a specific particle size in combination, it becomes possible to achieve both improvement of luminance and reduction of flow marks at the same time. In particular, by using the swellable lamellar silicate (B) in combination, metallic color development and luminance are improved, and further sufficient stiffness properties can be obtained.

It is necessary that the polyamide resin composition of the present invention contains a metallic material having a large average particle size (C1) and a metallic material having a small average particle size (C2)

An average particle size of the metallic material (C1) is 20 ∼ 40 µm. When the average particle size of the metallic material (C1) exceeds 40 µm, a reduction effect of flow marks cannot be obtained, being not preferable. When the average particle size of the metallic material (C1) is less than 20 pm, luminance is lowered, being not preferable. A thickness of the metallic material (C1) is preferably 0.2 ∼ 0.9 µm. When the thickness of the metallic material (C1) is less than 0.2 µm, the metallic material is transformed in a melting and kneading process, resulting in that sufficient luminance may not be obtained. When the average particle size of the metallic material (C1) exceeds 0.9 µm, the metallic material is liable to be oriented, resulting in that sufficient luminance may not be obtained.

An average particle size of the metallic material (C2) is 5 ∼ 10 µm. When the average particle size of the metallic material (C2) exceeds 10 µm, a reduction effect of flow marks cannot be obtained, being not preferable. When the average particle size of the metallic material (C2) is less than 5 µm, luminance is lowered, being not preferable. A thickness of the metallic material (C2) is preferably 0.1 ∼ 0.5 µm. When the thickness of the metallic material (C2) is less than 0.1 µm, the metallic material is transformed in a melting and kneading process, resulting in that sufficient luminance may not be obtained. When the average particle size of the metallic material (C2) exceeds 0.5 µm, the metallic material is liable to be oriented, resulting in that sufficient luminance may not be obtained.

The average particle size of the metallic material can be measured by a laser diffraction/scattering type particle size distribution measuring device, for example, Microtrac 2 (manufactured by Nikkiso Co., Ltd.). The average thickness of the metallic material can be obtained by calculating a simple average of 50 samples measurements of a metallic material, for example, aluminum powder in the cross section of a molded article by means of an electron microscopy.

It is necessary that a total content of the metallic material (C1) and the metallic material (C2) is 1 ∼ 7 parts by mass, preferably 2 ~ 4 parts by mass, more preferably 2 ∼ 3.5 parts by mass, relative to 100 parts by mass of the polyamide resin (A). When the total content of the metallic material (C1) and the metallic material (C2) is less than 1 part by mass, a molded article obtained is not provided with sufficient luminance, being not preferable. When it exceeds 7 parts by mass, smoothness of a molded article obtained is lowered and surface glossiness is lowered, being not preferable.

It is necessary that the metallic material (C1)/the metallic material (C2) (mass ratio) is within the range of 1.5 ∼ 3.0, more preferably 1.5 ∼ 2.5 (mass ratio). When the (C1)/(C2) is 1.5 ∼ 3.0, it is possible to reduce flow marks while luminance is improved. When the (C1)/(C2) is less than 1.5 or exceeds 2.5 or further 3.0, luminance is lowered and there is a tendency that a suppressing effect of generation of flow marks becomes insufficient, being not preferable.

The metallic material (C), is aluminum, pearl mica, or a mixture thereof, particularly, a mixture thereof or aluminum, more particularly, aluminum.

Pearl mica is a mica coated with titanium dioxide. As the thickness of the titanium dioxide is increased gradually, the reflecting color changes as the hue such as gold, red, purple, blue and green changes. Even when a metal oxide other than titanium dioxide is used, a pearl mica pigment with an adequate thickness of coating can be formed according to each kind thereof. There are also types colored yellow or gold in which mica is coated with iron oxide, titanium oxide + iron oxide. Pearl mica in which a thin layer of titanium dioxide, iron oxide or other metal oxides such as chromium, cobalt, tin and zirconium is formed by coating on the surface of natural mica or synthetic mica, and interference color effects are provided can be used as a pearl mica for use in the resin composition of the present invention. In particular, the pearl pigment used in the resin composition of the present invention is preferably a mica coated with titanium dioxide in a thin layer of 210 ∼ 400 nm.

Pigments, dyes, plasticizers, lubricants, release agents, antistatic agents, etc. can be added to the polyamide resin composition of the present invention as long as its properties are not greatly impaired. A method for admixing these to the polyamide resin composition of the present invention is not particularly limited. In particular, in order to assist the flame retardance, a condensed phosphate ester, a polyphosphoric acid, a nitrogen compound flame retardant and the like may be added.

A black pigment or black dye (D) may be contained. By containing the black pigment or the black dye, dignity of a metallic feeling of the molded article is increased and there is an effect that the metallic tone becomes stronger.

The black pigment is not particularly limited, and examples thereof include carbon black, acetylene black, lamp black, bone black, graphite, iron black, aniline black, cyanine black, and titanium black. Among them, carbon black is preferable because the above effect can be easily expressed without impairing the effect of the present invention.

The black dye is not particularly limited, and examples thereof include azine dyes including nigrosine and polycyclic condensed dyes including anthraquinone. Among these, azine dyes are preferable in terms of simple and easy handling. For example, commercial items such as NYB 27620 B (manufactured by Sanyo Kako Company Ltd.), Orient Spirit Black SB (manufactured by Orient Chemical Industries Co. Ltd.), Spirit Black Nos. 850 (manufactured by Sumitomo Chemical Co., Ltd.), Nigrosine Base LK (manufactured by BASF) and the like can be used. The above black pigment or black dye (D) may be used alone or in combination.

Among the azine dyes above, nigrosine is particularly preferable. As nigrosine, a black azine condensation mixture as described as C.I.SOLVENT BLACK 5 and C.I.SOLVENT BLACK 7 in COLOR INDEX can be exemplified. Synthesis of such the nigrosine can be carried out by oxidizing, dehydrating and condensing aniline, aniline hydrochloride and nitrobenzene in the presence of iron chloride at a reaction temperature of 160 ∼ 180 °C. Purified nigrosine, in which the nigrosine obtained as above is purified to reduce aniline and diphenylamine to less than 0.1%, is more preferred. As such the nigrosine, Cramity 81 and NUBIAN BLACK series manufactured by Orient Chemical Industries Co. Ltd. are commercially available.

When the black pigment or black dye (D) is used, the black pigment or black dye (D) having an average particle size of 0.005 ∼ 10 µm, preferably 0.01 ∼ 1 µm is used. When the particle size is too large, there is a problem that glossiness of the surface of the molded article is inhibited. If it is too small, agglomerates may appear on the surface of the molded product due to poor dispersion, and a dignified feeling may not be obtained.

A content of the black pigment or black dye (D) is 0.05 ∼ 0.8 parts by mass, preferably 0.1 ∼ 0.7 part by mass, more preferably 0.1 ∼ 0.5 parts by mass, relative to 100 parts by mass of the polyamide resin (A). When the content of the black pigment or black dye (D) is less than 0.05 parts by mass, a dignified feeling in the molded article obtained cannot be obtained. When the amount exceeds 0.8 parts by mass, the molded article has a dull glossy feeling of lead tone, and luminance decreases.

Relationship of content of the metallic material (C2) having an average particle size of 5 ∼ 10 µm and the black pigment or black dye (D) is in the range of (C2)/(D) = 3 ∼ 60, preferably 3.5 ∼ 40, more preferably 3.75 ∼ 30, even more preferably 4 ∼ 20 (mass ratio). It is possible to increase a dignified feeling with balance while a metallic feeling and luminance are improved. When the ratio of (C2)/(D) is too small, luminance may run short while the dignified feeling increases. When the ratio of (C2)/(D) is too large, the dignified feeling may run short.

A colored pigment or dye other than black may be contained. Blue, white, brown, cyan, green, purple, magenta, red, yellow, and mixtures thereof may be used. Suitable classes of colored pigments include anthraquinone, phthalocyanine blue, phthalocyanine green, diazo, monoazo, pyranthrone, perylene, heterocyclic yellow, quinacridone, and (thio) indigoidit.

Next, a method for producing a polyamide resin composition of the present invention will be described.

In the present invention, the polyamide resin composition may be produced by melting and kneading, for example, a polyamide resin (A), a swellable lamellar silicate (B), and a metallic material (C).

As a different method, a mixture of a polyamide resin (A) obtained by carrying out of polymerization reaction of monomer components constituting the polyamide resin (A) in the presence of a swellable lamellar silicate (B) with a swellable lamellar silicate (B) is provided, and the resultant mixture and a metallic material (C) are melted and mixed to give a polyamide resin composition.

By carrying out of polymerization reaction of monomer components constituting a polyamide resin (A) in the presence of a swellable lamellar silicate (B), the swellable lamellar silicate (B) can be dispersed uniformly in the polyamide resin (A), and glossiness of a molded article obtained can be further improved. As the above monomer used in the polymerization reaction, an aminocarboxylic acid and a lactam thereof can be used.

When a polyamide resin (A) is a copolymer constituted of 2 or more aminocarboxylic acid unis, it is preferable to produce by melting and mixing a polyamide resin containing a swellable lamellar silicate (B) which is obtained by carrying out co-polymerization reaction of 2 or more aminocarboxylic acids (lactams) in the presence of a swellable lamellar silicate (B), and metallic material.

When a polyamide resin (A) is a melted mixture of 2 or more kinds of polymers constituted of aminocarboxylic acid units, it is preferable to produce a polyamide resin composition by melting and mixing a polyamide resin containing a swellable lamellar silicate which is obtained by carrying out polymerization reaction of at least one polymer among the 2 or more kinds of polymers in the presence of a swellable lamellar silicate (B), the other polymers (or the other polymers containing a swellable lamellar silicate), and a metallic material. As the aminocarboxylic acid for polymerization reaction in the presence of a swellable lamellar silicate (B), 6-aminocaproic acid and ε-caprolactam are preferable from the viewpoint of such high effects as dispersing uniformly the swellable lamellar silicate (B).

When a melted mixture of 2 or more kinds of polymers constituted of aminocarboxylic acid units is used as the polyamide resin (A), it is preferable that those are sufficiently melted and kneaded. When the melting and kneading is insufficient, the respective polyamide resins are not mixed uniformly and a sea-island structure may appear in the case where, for example, the difference of the melt viscosity between 2 kinds of the polyamide resins to be melted and kneaded is large or the difference of melting point is large. In such a case, since it becomes difficult that the metallic material contained is made to be oriented uniformly when a molded article is produced particularly in the present invention, there may arise such a disadvantage as luminance deteriorates partially and luminance may become uneven. It is to be noted that such a fear is reduced when a copolymer constituted of 2 or more aminocarboxylic acid unis is used as a polyamide resin (A).

As a method for polymerizing an aminocarboxylic acid (lactam) in the presence of a swellable lamellar silicate (B), a method in which the swellable lamellar silicate (B) and the aminocarboxylic acid (lactam) are charged into an autoclave, and then melt polycondensation is carried out within the range of a temperature of 240 ∼ 300 °C, a pressure of 0.2 ∼ 3 MPa, and 1 ∼ 15 hours by use of an initiator such as water may be exemplified. As the lactam, when ε-caprolactam is used, it is preferable to carry out the polymerization within the range of a temperature of 250 ∼ 280 °C, a pressure of 0.5 ∼ 2 MPa, and 3 ∼ 5 hours.

It is preferable to refine pellets of polyamide resin with hot water in order to remove residual aminocarboxylic acid (lactam) in the polyamide resin after polymerization. As a purification method, for example, a treatment in hot water at 90 ∼ 100 °C for 8 hours or more is exemplified.

When a polyamide resin containing a swellable lamellar silicate and a metallic material (C) are melted and kneaded, a known melt-kneading extruder may be used. As a method for supplying a metallic material (C) to a melt-kneading extruder, an admixture of a metallic material (C) to the polyamide resin containing a swellable lamellar silicate may be supplied from a main hopper in a lump. In order to suppress of fragmentation and breaking of the metallic material (C) as much as possible, it is preferable to supply the metallic material (C) from a side-feeder in the middle of an extruder, more preferably in the downstream parts of the extruder if possible.

The polyamide resin containing a swellable lamellar silicate and the metallic material (C) may be melted and kneaded not sufficiently. In a subsequent injection-molding processing, there is no problem if they can be mixed within a range that does not interfere with works. If necessary, the polyamide resin containing a swellable lamellar silicate and the metallic material (C) are dry-blended and the resultant blend may be supplied directly to an injection molding machine. Injection molding may be carried out by carrying out melting and kneading in the injection molding machine.

Since the metallic material (C) is brittle against external stresses, it is preferable from the viewpoint of improving glossiness of a molded article obtained not to apply screw shearing stresses during melt kneading to the metallic material (C) as much as possible.

A molded article of the present invention is the one obtained by molding the above polyamide resin composition of the present invention. Examples of molding methods include methods such as injection molding, blow molding, extrusion molding, inflation molding, and vacuum forming after sheet processing, pressure forming, vacuum pressure molding and the like. Among them, injection molding is preferable. As the injection molding method, gas injection molding, injection press molding and the like can be adopted in addition to a general injection molding method.

As injection molding conditions suitable for the polyamide resin composition of the present invention, for example, the cylinder temperature is set to be equal to or higher than the melting point or flow initiation temperature of the resin composition, preferably 190 ∼ 270 °C, and, in addition, the mold temperature is set to be not more than (melting point - 20 °C) of the resin composition. If the molding temperature is too low, moldability becomes unstable resulting in, for example, short in the molded article, and loss of surface glossiness of a molded article obtained. If the molding temperature is too high, the polyamide resin composition may decompose, the strength of a molded article obtained may lower, and the surface glossiness may deteriorate.

The molded article of the present invention, in particular, the molded article obtained by the injection molding method, has high luminance. It is to be noted that various conditions at the time of injection molding, for example, resin temperature, injection speed, injection pressure, mold temperature and the like affect fluidity of the composition in the mold and further dispersibility of the swellable lamellar silicate (B) and the metallic material (C) in the polyamide resin composition. For example, when the injection speed is made high, the orientation of the metallic material (C) is disturbed and luminance tends to lower. Therefore, it is better to set the injection speed in the range from low speed to medium speed.

### INDUSTRIAL APPLICABILITY

Since the molded article of the present invention is a molded article with metallic appearance having few flow marks and high luminance, it may be applied suitably to various automotive, electric and electronic parts. Since the molded article of the present invention is excellent in luminance, such as metallic luster, particularly as resin parts, it can be applied to automotive parts, for example various instruments such as a speedometer, a tachometer, a fuel gauge, a water temperature gauge, and a distance meter etc. in the instrument panel; various switches and buttons around car stereo, navigation system, air conditioner; shift lever on center console; grip of side brake; door trim; arm rest; door lever; etc.; and in particular, replacements of metallic or conventional high-design parts for automotive interior parts. Because of improved dignified feeling, it is useful to be used as grip of side brake, door trim, arm rest and door lever etc.

### Examples

Hereinafter, the present invention will be specifically explained by referring to Examples, but the present invention is not limited by those Examples.

### 1. Evaluation method

### (1) Preparation of test pieces 1 and 2

Using the obtained polyamide resin compositions, injection molding was carried out under conditions of resin temperature 260 °C, mold temperature 100 °C, holding pressure 30 MPa, injection speed 100 mm/sec, injection pressure 100 MPa, cooling time 10s with EC-100 II type injection molding machine manufactured by Toshiba Machine Co., Ltd. to give a plate-like molded article having a length of 90 mm × a width of 50 mm × a thickness of 2 mm (test piece 1) and a plate-like molded article having a convex portion with a curvature radius of 50 mm at the center portion of 80 mm in length × 60 mm in width × 1 mm in thickness (a plate-like molded article in which a plate-like portion and a convex portion are in contact with each other in a circular shape having a diameter of 50 mm) (test piece 2). A mold having one side gate at the center in the short side direction was used.

### (2) Luminance

With respect to the test piece 1, using a variable angle spectrophotometer (variable angle spectrophotometric system GSP-2 type manufactured by Murakami Color Research Laboratory), L* value (D65/2 light source, field of view 2°) was measured with an incident angle of set to -45° with respect to the sample normal line, and with an light-acceptance angle set to 40° and 0°, as shown in FIG. 1. Each L* value is referred to as L∗40, L∗0 and summarized in Table 2.

With respect to L*40 which is an index of luminance, 160 or more, more strictly 180 or more was judged to be acceptable.

### (3) Flip-flop value

The flip-flop value was expressed by the ratio of L∗0 and L∗40 as a degree of change in metallic color development. The flip-flop value represents an index of metallic tone color development, and 4 or more was judged to be acceptable.

### (4) Flow mark

In the test piece 2, the skirt portion of the top of the convex portion was observed, and it was confirmed whether or not there was a portion where a color tone was changed when compared to the periphery (flow mark).
○ : There is not a portion where a color tone is changed when compared to the periphery portion.
× : There is a portion where a color tone is changed when compared to the periphery portion.

### (5) Surface glossiness

Surface glossiness of the test piece 1 was measured at the incident angle of 60 ° using a gloss meter (Gloss meter VG 7000 type manufactured by Nippon Denshoku Industries Co., Ltd.) according to JIS Z 8741.

The case where the glossiness was 85% or more, more strictly 90% or more was judged to be acceptable.

### (6) Flexural modulus

Flexural modulus was measured according to ISO 178.

A flexural modulus of 3 GPa or more was judged to be acceptable.

### 2. Raw material

### (1) Polyamide resin monomer component

- ε-caprolactam (manufactured by Ube Industries, Ltd.)

### (2) Swellable lamellar silicate

- B-1: Swellable fluoromica, "ME-100" manufactured by Co-op Chemical Co., Ltd. ; average particle size 6.0 µm, cation exchange capacity 110 meq /100 g
- B-2: Montmorillonite, manufactured by Hojun Co., Ltd. "Wenger HV"; average particle size 5.0 µm, cation exchange capacity 70 meq/100 g
- B-3: Hectorite, Elementis Specialities "Bentone HC", cation exchange amount: 80 meq/100 g

### (3) Metallic material

- C1-1: Aluminum paste "Silveeds M200-BP " (average particle size 20 µm, average thickness 0.4 µm, aluminum component 90%, polyethylene glycol 10%) manufactured by Asahi Kasei Chemicals Corporation
- C1-2: Aluminum paste " Silveeds M350-BP " (average particle size 35 µm, average thickness 0.4 µm, aluminum component 90%, polyethylene glycol 10%) manufactured by Asahi Kasei Chemicals Corporation
- C1-3: Pearl mica "TWINCLE PEARLSXE" (particle size 37 µm, titanium oxide-coated synthetic mica) manufactured by Nihon Koken Kogyo Co., Ltd.
- C2-1: Aluminum paste " Silveeds M050-AP " (average particle size 5 µm, average thickness 0.1 µm, aluminum component 90%, polyethylene glycol 10%) manufactured by Asahi Kasei Chemicals Corporation
- C2-2: Aluminum paste " Silveeds M100-BP " (average particle size 10 µm, average thickness 0.2 µm, aluminum component 90%, polyethylene glycol 10%) manufactured by Asahi Kasei Chemicals Corporation
- C2-3: Pearl mica "TWINCLE PEARLSXA" (particle size 9 µm, titanium oxide-coated synthetic mica) manufactured by Nihon Koken Kogyo Co., Ltd.

### (4) Black pigment

- D-1: Carbon black ("Raven 5000", primary particle size: 11 nm) (manufactured by Columbia Co., Ltd.)

### (5) Black dye

- D-2: Nigrosine ("Cramity 81" manufactured by Orient Chemical Industries Co., Ltd.)

### (6) Pigment other than black

- E-1: Blue pigment, ultramarine (ultramarine blue)

Production of swellable lamellar silicate-containing polyamide 6 resins (P-1) to (P-8)

### Production Example 1

Relative to 100 parts by mass of ε-caprolactam, 0.4 parts by mass of phosphorous acid, 4.5 parts by mass of swellable lamellar silicate (B-1) (fluoromica) and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-1) containing 5 % by mass of the swellable lamellar silicate (B-1) (this % by mass is relative to 100 parts by mass of the polyamide 6 resin obtained) (same hereinafter).

### Production Example 2

Relative to 100 parts by mass of ε-caprolactam, 0.4 parts by mass of phosphorous acid, 0.9 parts by mass of swellable lamellar silicate (B-1) and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-2) containing 1 % by mass of the swellable lamellar silicate (B-1).

### Production Example 3

Relative to 100 parts by mass of ε-caprolactam, 0.4 parts by mass of phosphorous acid, 9.2 parts by mass of swellable lamellar silicate (B-1) and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-3) containing 10 % by mass of the swellable lamellar silicate (B-1).

### Production Example 4

Relative to 100 parts by mass of ε-caprolactam, 0.4 parts by mass of phosphorous acid, 4.5 parts by mass of swellable lamellar silicate (B-2) (montmorillonite) and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-4) containing 5 % by mass of the swellable lamellar silicate (B-2).

### Production Example 5

Relative to 100 parts by mass of ε-caprolactam, 0.4 parts by mass of phosphorous acid, 4.5 parts by mass of swellable lamellar silicate (B-3) (hectorite) and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-5) containing 5 % by mass of the swellable lamellar silicate (B-3).

### Production Example 6

Relative to 100 parts by mass of ε-caprolactam, 0.4 parts by mass of phosphorous acid, 0.45 parts by mass of swellable lamellar silicate (B-1) and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-6) containing 0.5 % by mass of the swellable lamellar silicate (B-1).

### Production Example 7

Relative to 100 parts by mass of ε-caprolactam, 0.4 parts by mass of phosphorous acid, 10 parts by mass of swellable lamellar silicate (B-1) and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-7) containing 11 % by mass of the swellable lamellar silicate (B-1).

### Production Example 8

Relative to 100 parts by mass of ε-caprolactam, 0.4 parts by mass of phosphorous acid and 5 parts by mass of water were charged and stirred at 80 °C for 1 hour, and then the mixture was stirred at 260 °C under 0.7 MPa for 1 hour, and subsequently stirred at 260 °C at normal pressure for 1 hour. Thus, polymerization was carried out to give polyamide 6 resin (P-8).

### Polyamide resins (P-9) and (P-10)

- Polyamide resin (P-9): polyamide 11, "BMN O" manufactured by Arkema Inc.
- Polyamide resin (P-10): polyamide 12, "AMN O TLD" manufactured by Arkema Inc.

The compositions of the polyamide resins (P-1) to (P-8) are summarized in the following Table 1.

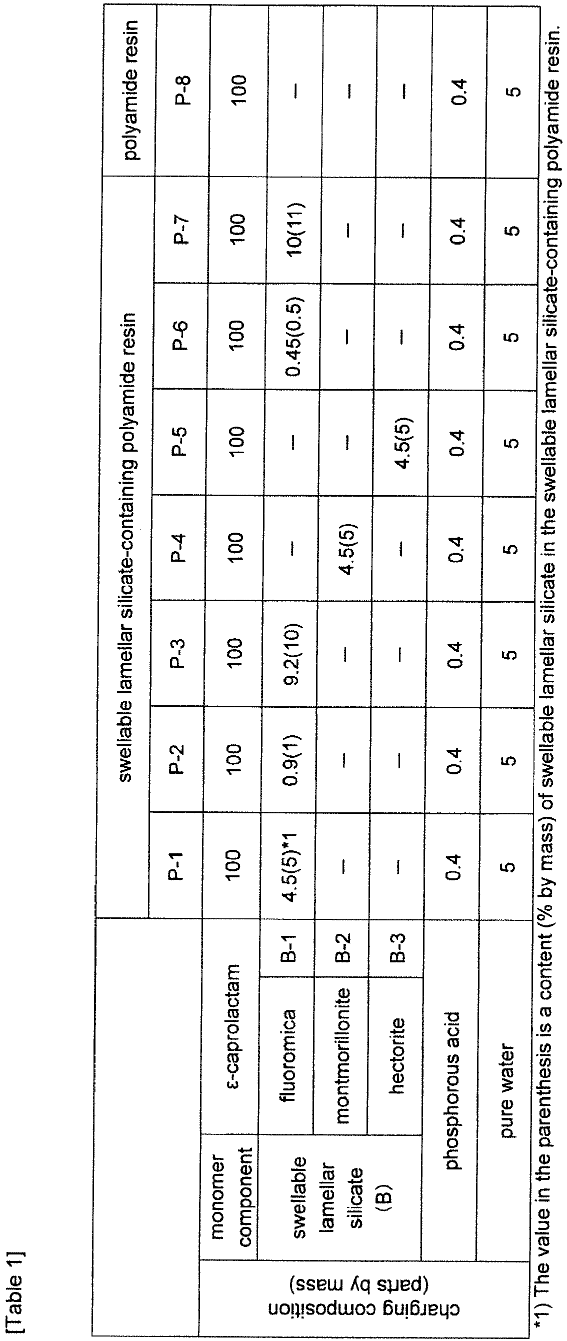

### Example 1

105 parts by mass of the swellable lamellar silicate-containing polyamide resin (P-1) obtained in Production Example 1, 1 part by mass of the metallic material (aluminum powder) (C1-1) and 2 parts by mass of the metallic material (aluminum powder) (C2-1) were mixed all at once. The resultant mixture was charged from the main hopper of the single screw extruder, melt-kneaded, and extruded in a strand form through the dies, followed by being cooled and pelletized to give pellets of a polyamide resin composition. Melt-kneading was carried out at a resin temperature of 260 °C, a screw rotation of 200 rpm and a discharge rate of 30 kg/hour.

Using the polyamide resin composition obtained, the above-mentioned test piece was prepared and then subjected to the above various evaluations. The results are shown in Table 2-1 and Table 2-2.

### Examples 2 ∼ 21, Comparative Examples 1 ∼ 11

Polyamide resin composition pellets were obtained in a manner similar to Example 1 except that the components were compounded in the compounding ratio described in Table 2-1 and Table 2-2.

Using the polyamide resin composition obtained, the above-mentioned test piece was prepared and then subjected to the above various evaluations. The results are shown in Table 2-1 and Table 2-2.

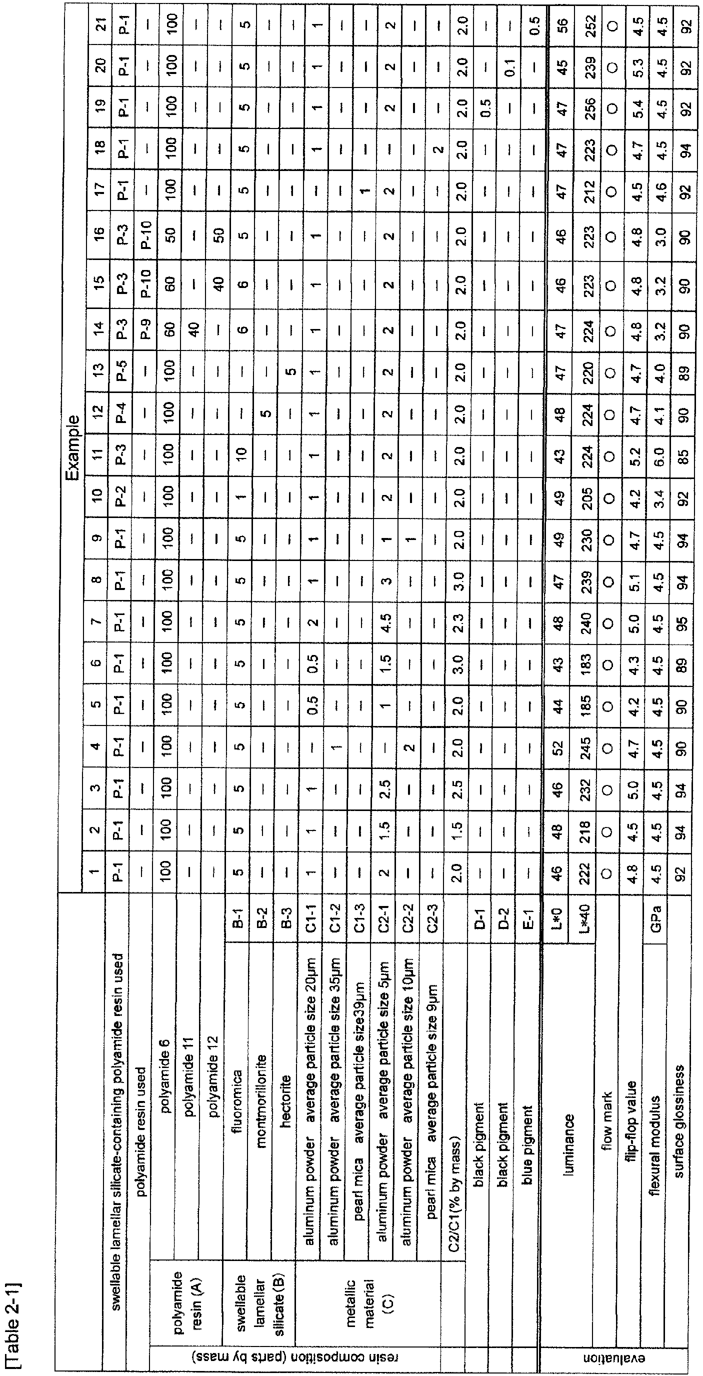

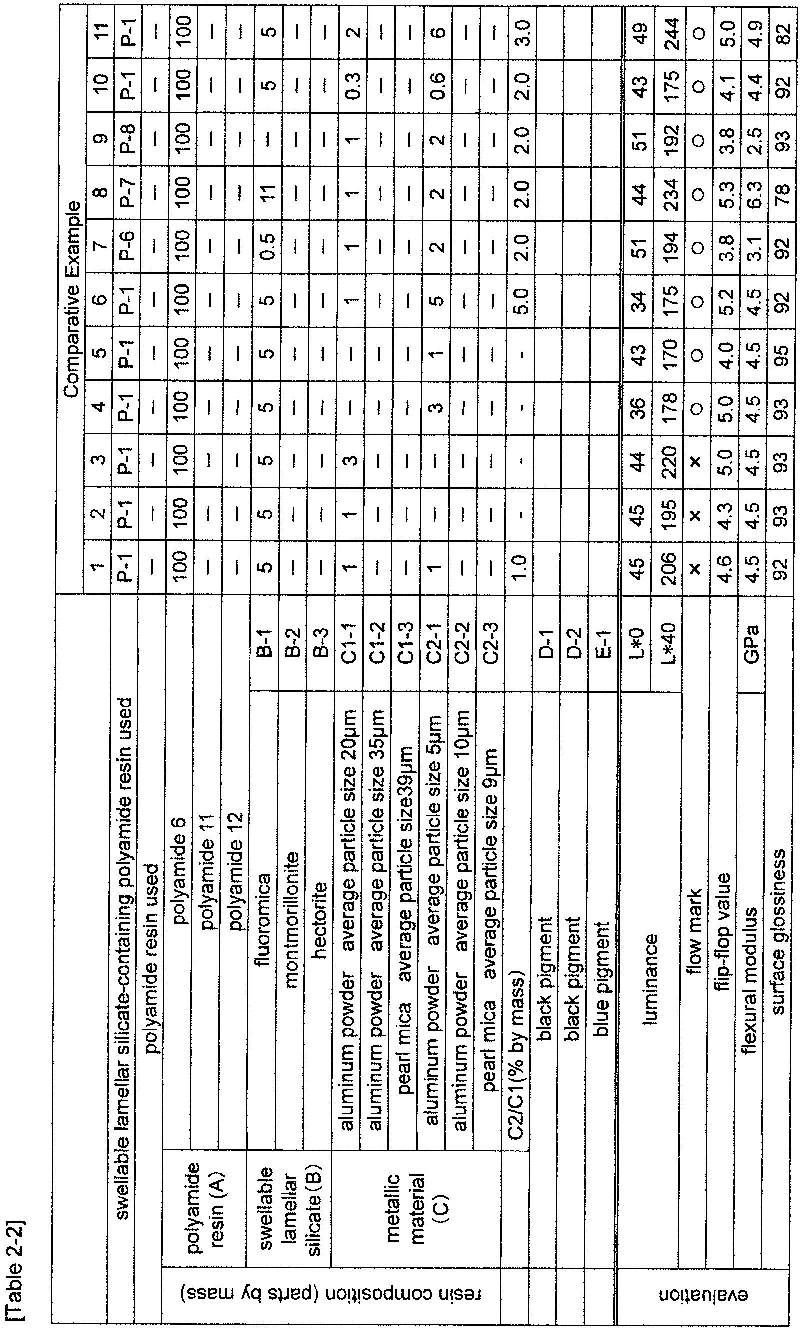

The polyamide resin compositions of Examples 1 ∼ 21 had a high luminance and a high flip-flops value, and the generation of flow marks was small. Stiffness properties and surface glossiness were also excellent.

Since the polyamide resin composition of Comparative Example 1 was small in the (C2) / (C1) of aluminum powder, a flow mark was generated.

In the polyamide resin compositions of Comparative Examples 2 and 3, since only one kind of aluminum powder was used, a flow mark was generated.

The polyamide resin composition of Comparative Example 4 was inferior in the evaluation of luminance since aluminum powder C2-1 (5 µm) only was used.

The polyamide resin composition of Comparative Example 5 was low in the luminance since the aluminum powder C2-1 (5 µm) only was used and the content thereof was low.

The polyamide resin composition of Comparative Example 6 was inferior in the evaluation of luminance since the content of the aluminum powder C2-1 (5 µm) of the C2/C1 was large.

The polyamide resin compositions of Comparative Example 7 and Comparative Example 9 were low in the flip-flop value since the content of the swellable lamellar silicate was small.

The polyamide resin composition of Comparative Example 8 was low in the surface glossiness since the content of the swellable lamellar silicate was large.

The polyamide resin of Comparative Example 10 was low in the luminance since the content of the aluminum powder was small.

The polyamide resin of Comparative Example 11 was low in the surface glossiness since the content of the aluminum powder was large.

## Claims

1. A polyamide resin composition, comprising at least:
1-10 parts by mass of a swellable lamellar silicate (B); and
1-7 parts by mass of a metallic material (C);
relative to 100 parts by mass of a polyamide resin (A),
wherein the polyamide resin (A) is polyamide 6, or a mixture of polyamide 6 with polyamide 11 or polyamide 12,
wherein a content of the polyamide 6 in the polyamide (A) is 40-100 percent by mass,
wherein the swellable lamellar silicate (B) is selected from fluoromica, montmorillonite, hectorite, and a mixture thereof,
wherein the metallic material (C) comprises a metallic material (C1) having an average particle size of 20-40 µm and a metallic material (C2) having an average particle size of 5-10 µm with any one of the following combinations:
| (C1) | (C2) |
|---|---|
| aluminum particles | aluminum particles |
| aluminum particles | pearl mica particles |
| pearl mica particles | aluminum particles |
wherein the average particle size is measured by a laser diffraction/scattering type particle size distribution measuring device,
wherein a (C2)/(C1) is 1.5 ∼ 3.0 (mass ratio).

2. A polyamide resin composition of Claim 1, further comprising 0.05∼0.8 parts by mass of a black pigment or a black dye (D), relative to 100 parts by mass of the polyamide resin (A), wherein a relationship of content of the black pigment or the black dye (D) is within the range of (C1)/(D) of 3∼60.

3. A molded article, comprising the polyamide resin composition of Claim 1 or 2.

## Patentansprüche

1. Polyamidharz-Zusammensetzung, umfassend mindestens:
1-10 Massenteile eines quellbaren lamellaren Silikats (B); und
1-7 Massenteile eines metallischen Materials (C);
bezogen auf 100 Massenteile eines Polyamidharzes (A),
wobei das Polyamidharz (A) ein Polyamid 6, oder eine Mischung aus Polyamid 6 mit Polyamid 11 oder Polyamid 12, ist,
wobei der Inhalt des Polyamids 6 in dem Polyamid (A) 40-100 Massenprozent beträgt,
wobei das quellbare lamellare Silikat (B) aus Fluorglimmer, Montmorillonit, Hectorit und einer Mischung davon ausgewählt ist,
wobei das metallische Material (C) ein metallisches Material (C1) mit einer durchschnittlichen Teilchengröße von 20-40 µm und ein metallisches Material (C2) mit einer durchschnittlichen Teilchengröße von 5-10 µm mit einer der folgenden Kombinationen, umfasst:
| (C1) | (C2) |
|---|---|
| Aluminiumteilchen | Aluminiumteilchen |
| Aluminiumteilchen | Perlglimmerteilchen |
| Perlglimmerteilchen | Aluminiumteilchen |
wobei die durchschnittliche Teilchengröße mit einer Teilchengrößenverteilungs-Messvorrichtung des Laserbeugungs-/Streuungs-Typs, gemessen wird,
wobei (C2)/(C1) 1,5∼3,0 (Massenverhältnis) ist.

2. Polyamidharz-Zusammensetzung gemäß Anspruch 1, ferner umfassend 0,05∼0,8 Massenteile eines schwarzen Pigments oder eines schwarzen Farbstoffs (D), bezogen auf 100 Massenteile des Polyamidharzes (A), wobei ein Gehaltsverhältnis des schwarzen Pigments oder des schwarzen Farbstoffs (D) im Bereich von (C1)/(D) von 3∼60 liegt.

3. Geformter Gegenstand, umfassend die Polyamidharz-Zusammensetzung gemäß Anspruch 1 oder 2.

## Revendications

1. Composition de résine polyamide, comprenant au moins :
de 1 à 10 parties en masse d'un silicate lamellaire dilatable (B) ; et
de 1 à 7 parties en masse d'un matériau métallique (C) ;
par rapport à 100 parties en masse d'une résine polyamide (A),
dans laquelle la résine polyamide (A) est un polyamide 6, ou un mélange de polyamide 6 avec un polyamide 11 ou un polyamide 12,
dans laquelle une teneur en polyamide 6 dans le polyamide (A) va de 40 à 100 pourcent en masse,
dans laquelle le silicate lamellaire dilatable (B) est sélectionné parmi le fluoromica, la montmorillonite, l'hectorite, et un mélange de ceux-ci,
dans laquelle le matériau métallique (C) comprend un matériau métallique (C1) présentant un diamètre moyen de particule de 20 à 40 µm et un matériau métallique (C2) présentant un diamètre moyen de particule de 5 à 10 µm avec l'une quelconque des combinaisons suivantes :
| (C1) | (C2) |
|---|---|
| particules d'aluminium | particules d'aluminium |
| particules d'aluminium | particules de margarite |
| particules de margarite | particules d'aluminium |
dans laquelle le diamètre moyen de particule est mesuré par un dispositif de mesure de distribution granulométrique du type à diffraction/diffusion laser,
dans laquelle (C2)/(C1) est égal à 1,5 ∼ 3,0 (rapport massique).

2. Composition de résine polyamide selon la revendication 1, comprenant en outre 0,05 ∼ 0,8 partie en masse d'un pigment noir ou d'un colorant noir (D), par rapport à 100 parties en masse de la résine polyamide (A), dans laquelle une relation de teneur en pigment noir ou en colorant noir (D) se situe dans la plage de (C1)/(D) de 3 ∼ 60.

3. Article moulé, comprenant la composition de résine polyamide selon la revendication 1 ou 2.
